# EUROPÄISCHE PATENTANMELDUNG

(11) **EP 1 992 881 A2**
(43) Veröffentlichungstag der Anmeldung: **19.11.2008**
(21) Anmeldenummer: 08006495.9
(22) Anmeldetag: 31.03.2008
(51) Int. Cl.: F24D 9/00, F24D 10/00

(54) **Verfahren zum Transport von Wärmeenergie und Vorrichtungen zur Durchführung eines solchen Verfahrens**

(30) Priorität: 16.05.2007 DE 102007022950
(71) Anmelder: Weiß, Dieter, 74731 Walldürn (DE)
(72) Erfinder: Weiß, Dieter, 74731 Walldürn (DE)
(74) Vertreter: Manitz, Finsterwald & Partner GbR

(57) **Zusammenfassung**

Die Erfindung betrifft ein Verfahren zum Transport von Wärmeenergie von zumindest einer Wärmequelle zu zumindest einer Wärmesenke, insbesondere für ein Fernwärmenetz, mittels eines Arbeitsmediums, das eine Mischung von zumindest einer ersten Komponente mit einem ersten Siedepunkt und einer zweiten Komponente mit einem zweiten Siedepunkt umfasst, wobei der erste Siedepunkt niedriger ist als der zweite Siedepunkt. Das Verfahren umfasst den Schritt eines zumindest teilweisen Verdampfens der ersten Komponente des Arbeitsmediums durch Zufuhr von Wärme von der Wärmequelle. Der verdampfte Teil der ersten Komponente wird separat von dem durch das Verdampfen bezüglich der ersten Komponente abgereicherten Arbeitsmedium von der Wärmequelle zu der Wärmesenke mittels eines Transportmittels transportiert. Danach wird die verdampfte erste Komponente durch das abgereicherte Arbeitsmedium unter Abgabe der beim Verdampfen aufgenommenen Wärme an die Wärmesenke absorbiert. Die Temperatur der ersten Komponente und des abgereicherten Arbeitsmediums entspricht bei dem Transport von der Wärmequelle zu der Wärmesenke im Wesentlichen einer in der Umgebung des Transportmittels herrschenden Temperatur. Die Erfindung betrifft weiterhin eine Extraktionsvorrichtung zur Erhöhung des Wirkungsgrads der Extraktion einer Komponente des Arbeitsmediums und ein Fernwärmenetz zum Transport von Wärmeenergie.

## Beschreibung

Die vorliegende Erfindung betrifft ein Verfahren zum Transport von Wärmeenergie von zumindest einer Wärmequelle zu zumindest einer Wärmesenke, insbesondere für ein Fernwärmenetz. Die Erfindung betrifft ferner ein entsprechendes Fernwärmenetz und eine Extraktionsvorrichtung zur Erhöhung des Wirkungsgrads der Extraktion einer Komponente eines mehrkomponentigen Arbeitsmediums.

In Zeiten steigender Rohstoffpreise wächst die Bedeutung einer effizienten Ausnutzung der zur Verfügung stehenden Ressourcen. Die Minimierung der Verluste bei dem Transport von Energie vom Energieerzeuger zum Verbraucher spielt in diesem Zusammenhang eine große Rolle.

Beispielsweise fallen bei der Erzeugung von Elektrizität in thermischen Kraftwerken große Mengen von Abwärme an, die häufig über Fließgewässer oder Kühltürme ungenutzt abgeführt werden. Dies führt einerseits zur Aufheizung der zur Kühlung genutzten Gewässer bzw. zur Nebelbildung im Umkreis der Kühltürme, andererseits wirkt sich die ungenutzte Abgabe der Abwärme negativ auf den Wirkungsgrad des Kraftwerks aus. Mit anderen Worten wird ein großer Teil der eingesetzten Primärenergie verschwendet.

Eine verbesserte Ausnutzung der Primärenergie wird durch eine sogenannte Kraft-Wärme-Kopplung erreicht. Ein Kraftwerk mit Kraft-Wärme-Kopplung nutzt die in dem verwendeten Brennstoff enthaltene Energie in erster Linie zur Erzeugung von Wasserdampf, der zum Antrieb von Turbinen genutzt wird, um elektrische Energie zu erzeugen. Der nach der Stromerzeugung abgekühlte und entspannte Wasserdampf wird dann allerdings nicht einem Kühlsystem zugeführt, sondern zur Erwärmung eines sekundären Wasserkreislaufs genutzt, der mit verschiedenen Wärmeverbrauchern, beispielsweise Haushalten und/oder Betrieben, über Rohrleitungsnetze - sogenannte Fernwärmnetze - in Verbindung steht. So wird die Abwärme des Kraftwerks genutzt, um in der Umgebung des Kraftwerks angesiedelte Haushalte und/oder Industrieunternehmen direkt mit Wärme zu versorgen.

Einer der limitierenden Faktoren des beschriebenen Konzepts ist die beschränkte Effizienz des Wärmetransports zwischen dem Kraftwerk und den Verbrauchern. Da Kraftwerke meist nicht in unmittelbarer Nähe von Ballungszentren errichtet werden, muss der Wärmeträger - also das heiße Wasser des Sekundärkreislaufs - über relativ große Entfernungen transportiert werden, wobei erhebliche Wärmeverluste auch bei einer guten Isolierung der Rohrleitungen nicht zu verhindern sind. Der Wirkungsgrad der Kraft-Wärme-Kopplung sinkt daher, je weiter die Wärme transportiert werden muss. Viele Kraftwerke sind aufgrund ihrer großen Entfernung zu geeigneten Verbrauchern somit nicht in Fernwärmenetze eingebunden.

Der Erfindung liegt die Aufgabe zugrunde, ein zuverlässiges Verfahren zum Transport von Wärmeenergie zu schaffen, das verringerte Wärmeverluste während des Transports aufweist und gleichzeitig wirtschaftlich konkurrenzfähig ist. Weiterhin sollen eine Vorrichtung zur effizienten Umsetzung des Verfahrens und ein für das Transportverfahren geeignetes Fernwärmenetz geschaffen werden.

Die Lösung dieser Aufgabe erfolgt durch ein Verfahren zum Transport von Wärmeenergie mit den Merkmalen des Anspruchs 1, sowie eine Extraktionsvorrichtung und ein Fernwärmenetz mit den Merkmalen der Ansprüche 11 bzw. 15.

Das erfindungsgemäße Verfahren zum Transport von Wärmeenergie von zumindest einer Wärmequelle zu zumindest einer Wärmesenke erfolgt mittels eines Arbeitsmediums, das eine Mischung von zumindest einer ersten Komponente mit einem ersten Siedepunkt und einer zweiten Komponente mit einem zweiten Siedepunkt umfasst, wobei der erste Siedepunkt niedriger ist als der zweite Siedepunkt. In einem ersten Schritt wird zumindest ein Teil der ersten Komponente des Arbeitsmediums durch die Zufuhr von Wärme von der Wärmequelle verdampft. Anschließend wird der verdampfte Teil der ersten Komponente separat von dem durch das Verdampfen bezüglich der ersten Komponenten abgereicherten Arbeitsmedium von der Wärmequelle zu der Wärmesenke mittels eines Transportmittels transportiert. Die Temperatur der ersten Komponente und des abgereicherten Arbeitsmediums beim Transport von der Wärmequelle zu der Wärmesenke entspricht dabei im Wesentlichen einer in der Umgebung des Transportmittels herrschenden Temperatur.

Nach dem Transport wird die verdampfte erste Komponente dann durch das abgereicherte Arbeitsmedium wieder absorbiert, wobei die beim Verdampfen aufgenommene Wärme an die Wärmesenke abgegeben wird.

Dieses Verfahren eignet sich insbesondere für ein Fernwärmenetz.

Bei der Wärmequelle kann es sich beispielsweise um ein herkömmliches Wärmekraftwerk handeln, das thermische Energie in elektrische Energie umsetzt, wobei die thermische Energie beispielsweise durch die Verbrennung von fossilen Brennstoffen oder durch nukleare Prozesse bereitgestellt werden kann. Natürliche Wärmequellen können Erdwärme oder Sonnenstrahlung darstellen. Als Wärmequelle kommt anstelle eines Wärmekraftwerks auch ein Abwärme erzeugender Industrieprozess in Frage.

Mögliche Wärmesenken sind beispielsweise Heizungssysteme privater oder gewerblich genutzter Gebäude. Die übertragene Wärme kann allerdings auch als Prozesswärme in Industriebetrieben genutzt werden.

Die Übertragung der Wärme zwischen der Wärmequelle und der Wärmesenke erfolgt mittels eines Arbeitsmediums, das ein Gemisch aus zumindest zwei verschiedenen Stoffen - Komponenten - mit unterschiedlichen Siedepunkten ist. Wird dem Arbeitsmedium Wärme von der Wärmequelle, also beispielsweise die Abwärme eines Kraftwerks, zugeführt, so beginnt die Komponente mit dem niedrigeren Siedepunkt zuerst zu verdampfen, wobei die Konzentration der ersten Komponente in dem Gemisch abnimmt. Es entsteht eine gasförmige Phase, die im Wesentlichen aus der ersten Komponente besteht, und eine flüssige Phase, die durch das bezüglich der ersten Komponente abgereicherte Arbeitsmedium gebildet wird. Die erste Komponente und das abgereicherte Arbeitsmedium werden getrennt voneinander von der Wärmequelle zu der Wärmesenke transportiert und erst dort wieder kombiniert, wobei die erste Komponente während des Transports auch in flüssiger Form vorliegen kann. Bei der nach dem Transport erfolgenden Absorption der ersten Komponente durch das abgereicherte Arbeitsmedium wird die vor dem Transport für das Verdampfen der ersten Komponente benötigte Wärme wieder abgegeben und kann beispielsweise über einen Wärmetauscher dem Heizungssystem eines Haushalts nutzbar gemacht werden.

Das Verfahren zum Transport von Wärmeenergie beruht somit auf einem thermodynamischen Kreislauf mit einem zumindest zweikomponentigen Stoffgemisch als Arbeitsmedium, welcher insbesondere die Aufspaltung des Arbeitsmediums in zwei Teilströme mit verschiedenen Aggregatszuständen durch ein selektives Verdampfen zumindest einer Komponente des Arbeitsmediums umfasst. Die vorher zum Verdampfen aufgebrachte Wärmemenge wird bei der Rekombination der separat voneinander übertragenen Teilströme wieder abgegeben. Das Verdampfen und die Absorption sind Teil eines reversiblen Prozesses, so dass die aufgenommene Verdampfungswärme der abgegebenen Absorptionswärme entspricht.

Um die Effizienz des Systems zu steigern, werden die Teilströme in etwa bei Umgebungstemperatur übertragen, so dass der thermische Gradient zwischen den Teilströmen und der Umgebung möglichst gering ist. Aufgrund des geringen Temperaturgefälles findet praktisch kein - oder nur ein geringer - Wärmeübergang von dem Arbeitsmedium in die Umgebung statt. Dieser unerwünschte Wärmeübergang stellt bei herkömmlichen Verfahren ein erhebliches Problem dar und ist nur durch umfangreiche Isolierungsmaßnahmen auf ein halbwegs akzeptables Maß reduzierbar.

Mit anderen Worten werden die erste Komponente und das abgereicherte Arbeitsmedium - zumindest bei einer großen Mehrheit der Realisierungen des Verfahrens - bei einer Temperatur übertragen, die unterhalb des Temperaturniveaus der Wärmesenke liegt. Die Wärmeenergie wird erst vor Ort wieder freigesetzt und der Wärmesenke zugeführt.

Ein weiterer Vorteil des erfindungsgemäßen Verfahrens liegt darin, dass die beim Verdampfen aufgenommene Wärmenergie gespeichert werden kann, indem die Teilströme getrennt voneinander gelagert werden, beispielsweise in Tanks. Erst bei Bedarf werden die Teilströme wieder kombiniert. Die Abgabe der Wärmeenergie kann somit zeitlich gesteuert werden.

Vorteilhafte Ausführungsformen der Erfindung sind in den Unteransprüchen, der Beschreibung und den Zeichnungen angegeben.

Gemäß einer Ausführungsform des erfindungsgemäßen Verfahrens wird der verdampfte Teil der ersten Komponente in einem gasförmigen Aggregatzustand von der Wärmequelle zu der Wärmesenke transportiert, während das bezüglich der ersten Komponente abgereicherte Arbeitsmedium in einem flüssigen Aggregatzustand von der Wärmequelle zu der Wärmesenke transportiert wird.

Der getrennte Transport der Teilströme kann grundsätzlich durch Lastwagen oder andere mobile Transportmittel erfolgen. Es ist allerdings bevorzugt, dass das Arbeitsmedium durch zwei separate Rohrleitungen von der Wärmequelle zu der Wärmesenke transportiert wird, wobei eine erste Rohrleitung zum Transport der ersten Komponente und eine zweite Rohrleitung zum Transport des bezüglich der ersten Komponente abgereicherten Arbeitsmediums vorgesehen ist. Bei dieser Ausführungsform erweist es sich als zweckmäßig, das Arbeitsmedium, das bei der Wärmesenke durch Absorption der ersten Komponente wieder "recycelt" wurde, durch eine dritte Rohrleitung zurück zu der Wärmequelle zu transportieren. Dadurch entsteht ein geschlossener und kontinuierlich betreibbarer Kreislauf.

Die Rohrleitungen können als Bündel zusammen im Erdreich verlegt werden. Die dort herrschenden Umgebungstemperaturen betragen in etwa 10°C. Die Temperatur der durch die erste und die zweite Rohrleitung übertragenen Teilströme liegt daher bevorzugt in einem Bereich um 10°C.

Bei einer entsprechend tiefen Verlegung der Rohrleitungen in dem Erdreich schwankt diese Temperatur aufgrund der thermischen Trägheit des Erdreichs jahreszeitlich kaum.

Das Verdampfen der ersten Komponente des Arbeitsmediums kann bei im Wesentlichen konstanter Temperatur erfolgen, wobei bei sinkender Konzentration der ersten Komponente in dem Arbeitsmedium der Druck des Arbeitsmediums schrittweise abgesenkt wird. Dieses schrittweise - oder auch in Stufen erfolgende - Absenken des Drucks des Arbeitsmediums erleichtert das Austreiben der ersten Komponente aus dem Arbeitsmedium und trägt somit zur Verbesserung der Effizienz des Systems bei.

Gemäß einer weiteren Ausführungsform des erfindungsgemäßen Verfahrens erfolgt das Verdampfen der ersten Komponente des Arbeitsmediums zumindest teilweise in einem ersten Druckbereich des Arbeitsmediums, der oberhalb des Drucks der ersten Komponente beim Transport von der Wärmequelle zu der Wärmesenke liegt. Zumindest ein weiterer Teil des Verdampfens der ersten Komponente des Arbeitsmediums erfolgt in einem zweiten Druckbereich des Arbeitsmediums, der unterhalb des Drucks der ersten Komponente beim Transport von der Wärmequelle zu der Wärmesenke liegt.

Mit anderen Worten wird bei dieser Ausführungsform der Druck des Teils der ersten Komponente, der in dem ersten Druckbereich verdampft wird, auf einen Transportdruck abgesenkt. Durch den Begriff "Druckbereich" soll ausgedrückt werden, dass das Verdampfen auf einem Druckniveau oder auf mehreren verschiedenen Druckniveaus oberhalb des Transportdrucks erfolgen kann. Analoges gilt für den zweiten Druckbereich, der sich unterhalb des Transportdrucks befindet. Der auf einem Druckniveau oder auf mehreren verschiedenen Druckniveaus des zweiten Druckbereichs verdampfte Teil der ersten Komponente wird zum Transport auf das Transportdruckniveau angehoben.

Der beim Verdampfen in dem ersten Druckbereich erhaltene Teil der ersten Komponente kann zur Erzeugung von mechanischer Energie genutzt werden, während der beim Verdampfen in dem zweiten Druckbereich erhaltene Teil der ersten Komponente durch zumindest einen Verdichter abgesaugt wird. Vorzugsweise wird die erzeugte mechanische Energie direkt zum Antrieb des Verdichters genutzt. Es kann allerdings auch vorgesehen sein, dass die mechanische Energie in elektrische Energie umgewandelt wird.

Die wärmesenkenseitige Absorption der ersten Komponente durch das abgereicherte Arbeitsmedium kann bei einem im Wesentlichen konstanten Druck erfolgen, wobei bei steigender Konzentration der ersten Komponente in dem Arbeitsmedium die Absorption bei schrittweise sinkenden Temperaturen erfolgt. Die Absorption kann somit - wie das Austreiben der ersten Komponente - schritt- oder stufenweise erfolgen.

Als ein geeignetes Arbeitsmedium hat sich ein Ammoniak-Wasser-Gemisch erwiesen, wobei das Mischungsverhältnis von Wasser zu Ammoniak in etwa 4 zu 6 beträgt (40 % Wasser, 60 % Ammoniak). Das Mischungsverhältnis bezieht sich auf das Arbeitsmedium im Grundzustand vor dem Verdampfen eines Teils der ersten Komponente, beispielsweise auf dem Weg von der Wärmesenke zu der Wärmequelle.

Mit anderen Worten handelt es sich bei dem bevorzugten Arbeitsmedium um eine Lösung von Ammoniak (NH₃) in Wasser (60 %-ige Ammoniaklösung), wobei die Konzentration der Lösung an die jeweils vorliegenden Anforderungen angepasst werden kann. Abhängig von den Randbedingungen des Wärmetransports, beispielsweise den Temperaturniveaus der Wärmequelle und/oder der Wärmesenke, können andere Stoffgemische vorgesehen sein.

Das erfindungsgemäße Verfahren ermöglicht den Transport von mehr Wärmeenergie pro Volumeneinheit verglichen mit den bisher verwendeten Wärmeträgern. In herkömmlichen Fernwärmenetzen wird beispielsweise Wasser mit einer Temperatur von etwa 80°C übertragen. Bei Abkühlung des Wassers um 50°C in einem Heizungssystem beträgt die nutzbare Wärmemenge pro Liter daher maximal 50 kcal. Im Gegensatz dazu wird bei dem erfindungsgemäßen Verfahren bei Rekombination des Ammoniaks und der Restlösung eine Wärmemenge von etwa 150 kcal pro Liter frei. Die höhere "Wärmedichte" des vorliegenden Verfahrens ermöglicht es daher, das Transportmittel des Arbeitsmediums - beispielsweise Rohrleitungen - entsprechend kleiner zu dimensionieren.

Die Effizienz des erfindungsgemäßen Wärmetransportverfahrens hängt auch von der Effizienz des Extraktionsprozesses - d.h. des Austreibens - der ersten Komponente des Arbeitsmediums aus dem Arbeitsmedium ab. Das Erfindungskonzept umfasst daher ferner eine Extraktionsvorrichtung zur Erhöhung des Wirkungsgrads der Extraktion der ersten Komponente des vorstehend beschriebenen Arbeitsmediums. Diese Extraktionsvorrichtung umfasst zumindest eine Turbine und zumindest einen Verdichter, wobei der Turbine und dem Verdichter jeweils ein durch Zufuhr von Wärme verdampfter Teil der ersten Komponente in einem gasförmigen Zustand zuführbar ist. Der Druck des der Turbine zugeführten Teils der ersten Komponente ist höher als der Druck des dem Verdichter zugeführten Teils der ersten Komponente. Durch den ihr zugeführten Teil der ersten Komponente ist die Turbine zu einer Drehbewegung antreibbar, während der Verdichter antreibbar ist, um den Druck des dem Verdichter zugeführten Teils der ersten Komponente zu erhöhen.

Der Turbine und/oder dem Verdichter kann die gasförmige erste Komponente jeweils auf mehreren verschiedenen Druckniveaus zuführbar sein. In diesem Fall sind die Turbine und/oder der Verdichter insbesondere mehrstufig, wobei den Stufen der Turbine und/oder des Verdichters jeweils Teile der gasförmigen ersten Komponente auf einem jeweils stufenspezifischen Druckniveau zuführbar sind. Dadurch kann das vorstehend beschriebene Verfahren zum Verdampfen der ersten Komponente auf einfache und effiziente Weise umgesetzt werden.

Die Effizienz des Systems wird zusätzlich gesteigert, wenn die Turbine und der Verdichter direkt mechanisch miteinander gekoppelt sind, insbesondere eine gemeinsame Rotationsachse aufweisen. Grundsätzlich kann auch eine mechanische Kopplung über eine zwischen der Turbine und dem Verdichter angeordnete Getriebestufe vorgesehen sein.

Ein erfindungsgemäßes Fernwärmenetz zum Transport von Wärmeenergie von zumindest einem Wärmeerzeuger zu zumindest einem Wärmeverbraucher mittels des vorstehend beschriebenen Arbeitsmediums umfasst zumindest einen Austreiber zum Trennen eines Teils der ersten Komponente von dem Arbeitsmedium, ein Rohrleitungssystem und zumindest einen Absorber zur Absorption des abgetrennten Teils der ersten Komponente durch das bezüglich der ersten Komponente abgereicherte Arbeitsmedium, wobei das Rohrleitungssystem für den Transport des abgetrennten Teils der ersten Komponente und des bezüglich der ersten Komponente abgereicherten Arbeitsmediums von dem Austreiber zu dem Absorber jeweils eine separate Rohrleitung aufweist. Der Austreiber und der Absorber können jeweils über einen Wärmetauscher mit dem Wärmeerzeuger bzw. dem Wärmeverbraucher in Verbindung stehen.

Bei dem Wärmeerzeuger und dem Wärmeverbraucher kann es sich um eine oder mehrere der vorstehend beschriebenen Wärmequellen bzw. Wärmesenken handeln.

Um die Effizienz des Fernwärmenetzes zu verbessern, kann dem Austreiber eine Extraktionsvorrichtung gemäß einer der vorstehend beschriebenen Ausführungsformen zugeordnet sein.

Es ist bevorzugt, wenn der Austreiber bei dem Wärmeerzeuger und der Absorber bei dem Wärmeverbraucher angeordnet sind. Beispielsweise befindet sich der Austreiber in räumlicher Nähe eines Kraftwerks, während der Absorber in einem zu heizenden Gebäudes angeordnet ist.

Die Erfindung wird im Folgenden rein beispielhaft anhand vorteilhafter Ausführungsformen und unter Bezugnahme auf die Zeichnungen beschrieben. Es zeigen:
- Fig. 1: eine schematische Darstellung einer Ausführungsform eines Systems zum Transport von Wärmeenergie,
- Fig. 2: ein Druck-Temperatur-Phasendiagramm für verschiedene Ammoniak-Wasser-Gemische mit unterschiedlichen Ammoniakkonzentrationen,
- Fig. 3: eine schematische Darstellung eines Systems zum Trennen von Ammoniakgas von einem AmmoniakWasser-Gemisch durch Verdampfen,
- Fig. 4: einen schematischen Querschnitt durch ein Rohrleitungssystem eines erfindungsgemäßen Fernwärmenetzes,
- Fig. 5: ein Druck-Temperatur-Phasendiagramm zur Veranschaulichung der Absorption des Ammoniakgases durch ein abgereichertes Ammoniak-Wasser-Gemisch,
- Fig. 6: ein System zur Absorption des Ammoniakgases durch das abgereicherte Ammoniak-Wasser-Gemisch.

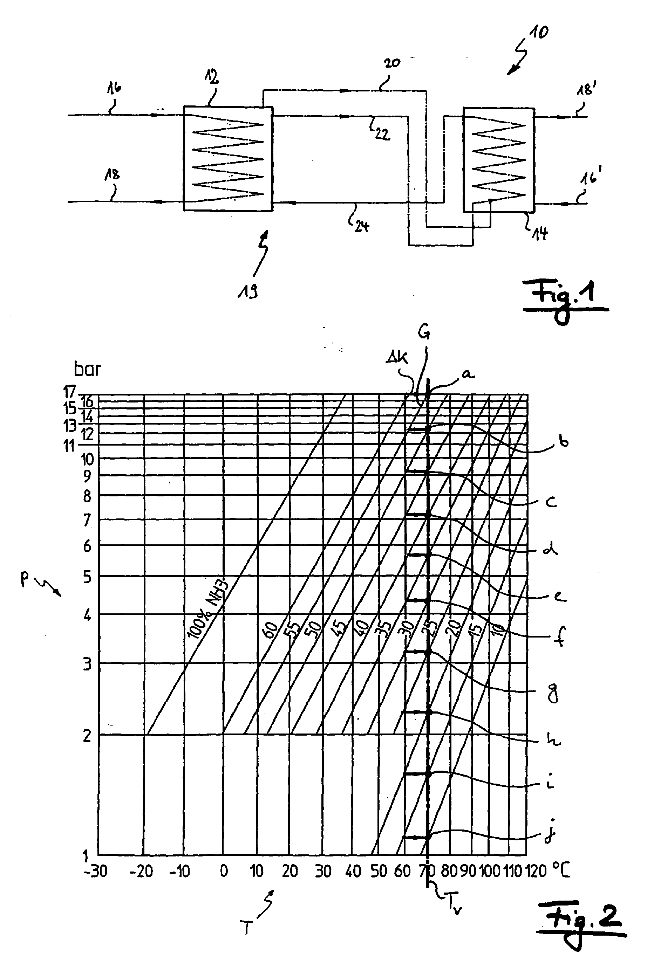

Fig. 1 zeigt ein Wärmetransportsystem 10, das einen Austreiber 12 und einen Absorber 14 umfasst. Der Absorber 12 steht über eine Zuleitung 16 und eine Ableitung 18 mit einer Wärmequelle (nicht gezeigt) in Verbindung. Mit anderen Worten wird dem Austreiber 12 ein heißes Arbeitsmittel, beispielsweise Heißwasser oder Wasserdampf, zugeführt, das den Austreiber 12 durch die Ableitung 18 wieder verlässt. In analoger Weise steht der Absorber 14 über eine Zuleitung 16' und eine Ableitung 18' mit einer Wärmesenke (nicht gezeigt) in Verbindung. Der Austreiber 12 und der Absorber 14 stehen ebenfalls über Rohrleitungen 20, 22, 24 miteinander in Verbindung, wodurch ein Wärmetransportkreislauf 19 gebildet wird, in dem ein Arbeitsmedium zirkulieren kann. Bei der dargestellten Ausführungsform des Wärmetransportsystems 10 handelt es sich bei dem Arbeitsmedium um eine 60 %-ige Mischung von Ammoniak und Wasser.

In dem Austreiber 12 wird dem Arbeitsmedium - ähnlich wie in einem herkömmlichen Wärmetauscher - Wärme zugeführt, die dem Arbeitsmittel der Wärmequelle als Abwärme entnommen wird. Die durch das vorliegende erfindungsgemäße Verfahren genutzte Abwärme der Wärmequelle weist eine relativ niedrige Temperatur (Arbeitsmitteltemperatur) auf, so dass sie sich nicht mehr zur Stromerzeugung eignet. Herkömmlicherweise wird diese Abwärme über Kühlanlagen ungenutzt abgeführt. Durch das Ammoniak-Wasser-Gemisch in dem Wärmetransportkreislauf 19 kann die Abwärme allerdings vorteilhaft nutzbar gemacht werden.

Während das Wasser bei den üblichen Abwärmetemperaturen seinen Siedepunkt noch nicht erreicht hat, beginnt das Ammoniak zu verdampfen. Das Arbeitsmedium spaltet sich daher in eine Ammoniak-Gasphase und in eine flüssigen Phase des Arbeitsmediums auf, die zunehmend bezüglich des Ammoniaks abgereichert ist und auch als Restlösung bezeichnet wird. Mit anderen Worten wird das Arbeitsmedium unter Zufuhr von Verdampfungswärme in zwei Teilströme mit unterschiedlichen Aggregatzuständen aufgetrennt.

Die beiden Teilströme werden anschließend dem Absorber 14 getrennt voneinander zugeführt. Zu diesem Zweck weist der Wärmetransportkreislauf 19 eine Ammoniakgasleitung 20 und eine Restlösungsleitung 22 für das abgereicherte Arbeitsmedium auf.

In dem Absorber 14 wird dem abgereicherten Arbeitsmedium - der Restlösung - wieder Ammoniakgas zugeführt. Die Absorption des Ammoniakgases durch die Restlösung ist in Umkehrung des endogenen Verdampfungsprozesses ein exogener Vorgang, bei dem die beim Verdampfen aufgewendete Wärme wieder freisetzt wird. Die freigesetzte Wärme wird in dem Absorber 14 an ein Arbeitsmittel der Wärmesenke, beispielsweise das Wasser eines Heizkreislaufs, abgegeben und anschließend über die Ableitung 18' abgeführt.

Durch die Absorption des gasförmigen Ammoniaks durch die Restlösung wird die Ausgangszusammensetzung des Arbeitsmediums wieder hergestellt. Das Arbeitsmedium wird anschließend durch eine Rücklaufleitung 24 von dem Absorber 14 zu dem Austreiber 12 geleitet, wo der vorstehend beschriebene thermodynamische Prozess aufs Neue beginnt.

Wie eingangs beschrieben, finden bei herkömmlichen Fernwärmenetzen die größten Wärmeverluste während des Transports des heißen Arbeitsmittels zwischen der Wärmequelle und der Wärmesenke statt. Bei dem vorliegenden System wird dahingegen die Wärme durch die Aufspaltung des Arbeitsmediums in verschiedene Aggregatszustände "zwischengespeichert" und erst vor Ort durch Rekombination der Teilströme freigesetzt. Es muss also kein heißes Arbeitsmedium übertragen werden, um Wärmeenergie zu transportieren. Die Temperatur der Teilströme, d.h. die Temperatur des Ammoniakgases und der Restlösung in den Leitungen 20, 22, entspricht in etwa der Temperatur ihrer Umgebung und liegt daher üblicherweise unterhalb dem Temperaturniveau des Arbeitsmittels der Wärmesenke. Handelt es sich bei den Leitungen 20, 22, 24 beispielsweise um Rohrleitungssysteme, die im Erdreich verlegt sind, beträgt die Übertragungstemperatur in etwa 10°C, wobei die Übertragungstemperatur von diesem Wert auch beispielsweise um +/- 50% abweichen kann. Aufgrund des geringen bzw. gänzlich fehlenden Temperaturgradienten zwischen den übertragenen Teilströmen und dem die Rohrleitung umgebenden Erdreich sind die zusätzlichen Wärmeverluste sehr gering.

Zwar weisen sowohl der gasförmige als auch der flüssige Teilstrom nach Verlassen des Austreibers 12 erhöhte Temperaturen auf. Diese Wärme kann den Teilströmen allerdings in geeigneter Weise vor dem Transport zu dem Absorber 14 entnommen werden, beispielsweise um das Arbeitsmedium in der Rücklaufleitung 24 vor Eintritt des Arbeitsmediums in den Austreiber 12 zu erwärmen, um den Wirkungsgrad des Systems weiter zu verbessern.

Anhand des Phasendiagramms von Fig. 2 wird nachfolgend der Austreibungsprozess des Ammoniaks beschrieben. Fig. 2 zeigt Druck-Temperatur-Phasendiagramme (p-T-Diagramm) für Ammoniak-Wasser-Gemische mit unterschiedlichen Ammoniakkonzentrationen, wobei auf der Abszisse die Temperatur T und auf der Ordinate der Druck p aufgetragen ist. Die schräg zu den Achsen des Koordinatensystems verlaufenden Linien stellen die Gleichgewichtszustände zwischen der Gasphase und der flüssigen Lösungsphase von Ammoniak-Wasser-Gemischen mit verschiedenen Ammoniakkonzentrationen dar. D.h. bei p-T-Bedingungen, die rechts der jeweiligen Linie liegen, beginnt gasförmiges Ammoniak die Lösung zu verlassen. Die den schrägen Linien zugeordneten Zahlen geben die entsprechende Konzentration des Ammoniaks in der Lösung wieder.

Liegt beispielsweise zu Beginn des vorstehend anhand von Fig. 1 beschriebenen thermodynamischen Prozesses - d.h. bei Eintritt des Gemisches in den Austreiber 12 - eine 60 %-ige Ammoniak-Wasser-Lösung bei einem Druck von 17 bar und einer Verdampfungstemperatur Tv von 70°C (Zustand a) vor, so beginnt Ammoniakgas zu verdampfen. Mit anderen Worten wird der Ammoniak durch die ständige Wärmezufuhr aus der Lösung "ausgekocht" oder "ausgetrieben". Dabei sinkt die Konzentration des gelösten Ammoniaks, bis die Lösung eine Ammoniakkonzentration von 55 % aufweist. Die Konzentrationsänderung ΔK wird durch den dicken horizontalen Pfeil veranschaulicht. Das Arbeitsmedium wird also abgereichert. Bei 17 bar und 70°C kann, wie Fig. 2 zu entnehmen ist, nicht noch mehr Ammoniak ausgasen. Die Lösung befindet sich bei dieser Konzentration und diesen Druck- und Temperaturverhältnissen (p-T-Verhältnissen) im Gleichgewicht, was durch die mit der Zahl 55 bezeichnete schräge Linie G symbolisiert wird, die den Gleichgewichtszustand einer 55 %-igen Ammoniaklösung als Funktion des Drucks und der Temperatur darstellt.

Um das Austreiben des Ammoniakgases fortzusetzen, wird der Druck der nun 55 %-igen Ammoniaklösung auf 12,2 bar verringert, wobei die Temperatur durch die konstante Zufuhr von Wärme der Wärmequelle konstant auf der Verdampfungstemperatur Tv von etwa 70°C gehalten wird (Zustand b). Bei diesen p-T-Verhältnissen wird wieder Ammoniakgas aus der Lösung ausgetrieben, bis eine Ammoniakkonzentration von 50 % erreicht ist.

Wird bei den im Zustand b herrschenden p-T-Verhältnissen eine Ammoniakkonzentration von 50 % erreicht, wird der Druck - bei gleich bleibender Temperatur Tv - auf 9,1 bar (Zustand c) abgesenkt, damit weiter Ammoniakgas aus der Lösung ausgetrieben werden kann.

Wie in Fig. 2 angedeutet, erfolgt die Druckabsenkung bei konstanter Verdampfungstemperatur Tv in mehreren Schritten. Die weiteren Schritte umfassen Druckniveaus von 7,1 bar (Zustand d), 5,6 bar (Zustand e), 4,4 bar (Zustand f), 3,2 bar (Zustand g), 2,3 bar (Zustand h), 1,8 bar (Zustand i) und 1,2 bar (Zustand j). Nach dem letzten Druckabsenkungsschritt hat die Restlösung eine Ammoniakkonzentration von lediglich 10 %. Diese Restlösung und das ausgetriebene gasförmige Ammoniak werden dann, wie vorstehend bereits beschrieben, zu dem Absorber transportiert.

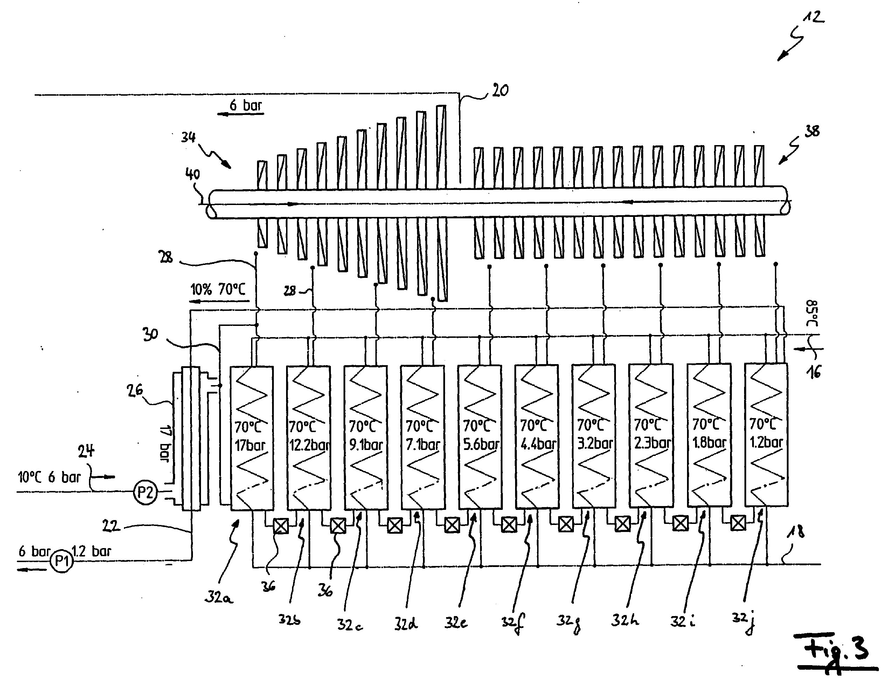

Vorzugsweise findet die Druckabsenkung nicht in einer einzigen Austreiberstufe in zeitlich aufeinander folgenden Schritten statt, sondern wird mittels einer kaskadenartigen Anordnung von Austreibereinheiten in mehreren Stufen kontinuierlich durchgeführt, wie dies nachfolgend anhand von Fig. 3 beschrieben wird.

Fig. 3 zeigt einen Austreiber 12, dem durch die Rücklaufleitung 24 das 60 %-ige Ammoniak-Wasser-Gemisch bei 10°C und 6 bar zugeführt wird. Durch eine Pumpe P2 wird der Druck des Arbeitsmediums auf 17 bar erhöht. Anschließend tritt das Arbeitsmedium in einen Wärmetauscher 26 ein, wo es durch die abgereicherte Lösung in der Restlösungsleitung 22 im Gegenstromverfahren erwärmt wird. Eventuell wird in dem Wärmetauscher 26 bereits ein Teil des Ammoniaks ausgetrieben, das einer Zufuhrleitung 28 über eine Überbrückungsleitung 30 direkt zugeführt wird.

Der Hauptteil des vorgeheizten Arbeitsmediums wird einer ersten Austreiberstufe 32a zugeleitet. Die Austreiberstufe 32a wird durch die Zuleitung 16 mit von einer Niederdruckdampfturbine (nicht gezeigt) kommendem Wasserdampf mit einer Temperatur von 85°C beliefert. Unter Wärmeabgabe kondensiert der Wasserdampf in der Austreiberstufe 32a zu flüssigem Wasser, welches über die Ableitung 18 wieder dem Kraftwerk zugeführt wird. In der ersten Austreiberstufe 32a weist die Ammoniak-Wasser-Lösung eine Temperatur Tv von 70°C und 17 bar auf (Zustand a). Durch das Abkühlen des Wasserdampfs wird Wärme an die Lösung abgegeben, die zur Verdampfung eines Teils des gelösten Ammoniaks führt, der über die Zufuhrleitung 28 einer Turbine 34 zugeführt wird. Das der Turbine 34 zugeführte Ammoniakgas weist einen Druck von 17 bar auf.

Wenn die Konzentration des Ammoniaks in der Ammoniak-Wasser-Lösung auf 55 % reduziert wurde, wird der Flüssigkeitsdruck durch ein Druckreduktionsventil 36 auf einen Druck von 12,2 bar verringert und das abgereicherte Arbeitsmedium in die nächste Austreiberstufe 32b überführt, wo dem Wasserdampf des Kraftwerks in analoger Weise Wärme zum Verdampfen des Ammoniaks entnommen wird. Das Ammoniakgas wird auf einem Druckniveau von 12,2 bar der Turbine 34 zugeführt.

Den Zuständen a bis j der Fig. 2 ist jeweils eine eigene Austreiberstufe 32a bis 32j zugeordnet, die auf den entsprechenden Druckniveaus arbeiten. Die sich in den Austreiberstufen 32a bis 32j einstellende Temperatur ist in etwa gleich und beträgt 70°C. Wie vorstehend bereits ausgeführt, nimmt in dieser kaskadenartigen Anordnung der Austreiberstufen 32a bis 32j das jeweils darin herrschende Druckniveau ab. Der Turbine 34 wird daher Ammoniakgas auf verschiedenen Druckniveaus über jeweils eigene Zufuhrleitungen 28 zugeführt.

Bei der Turbine 34 handelt es sich daher vorzugsweise um eine mehrstufige Turbine. Bei einer derartigen Turbine 34 kann das Ammoniakgas auf den verschiedenen Druckniveaus in die jeweils geeignete Turbinenstufe injiziert werden. Zur Erreichung eines hohen Wirkungsgrads sind die der Turbine zugeordneten Austreiberstufen 32a bis 32d und die Stufen der Turbine 34 aufeinander abgestimmt.

Die Turbine 34 erhält somit Ammoniakgas auf verschiedenen Druckniveaus, die alle oberhalb eines Transportdrucks von etwa 6 bar liegen. Der Transportdruck dient zur Übertragung des Ammoniakgases von dem Austreiber 12 zu dem Absorber 14. Durch den Unterschied zwischen dem Ammoniakgasdruck der Austreiberstufen 32a bis 32d und dem Transportdruck wird die Turbine 34 zu einer Drehbewegung angetrieben. Die dabei entstehende mechanische Energie kann entweder über einen Generator (nicht gezeigt) in elektrische Energie umgewandelt werden oder direkt oder indirekt einem Verdichter 38 zugeführt werden, der das Ammoniakgas der den Zuständen e bis j zugeordneten Austreiberstufen 32e bis 32j auf das Transportdruckniveau von 6 bar anhebt. In Analogie zu der Turbine 34 ist auch der Verdichter 38 mehrstufig, so dass ihm Ammoniakgas auf verschiedenen Druckniveaus zugeführt werden kann.

Wie in Fig. 3 gezeigt, bilden die Turbine 34 und der Verdichter 38 eine Einheit mit einer gemeinsamen Rotationsachse 40. Mit anderen Worten treibt das bei hohen Drücken ausgetriebene Ammoniakgas die Turbine 34 an, um das bei niedrigen Drücken ausgetriebene Ammoniakgas mit dem Verdichter 38 auf das Transportdruckniveau von etwa 6 bar zu bringen. Eventuell kann zusätzlich ein Generator (nicht gezeigt) mit der Rotationsachse 40 verbunden werden, um überschüssige mechanische Energie in Strom umzuwandeln. Die Turbinen-Verdichter-Kombination der Turbine 34 und des Verdichters 38 unterstützt die Trennung des Ammoniakgases von der Lösung und erhöht somit den Wirkungsgrad des thermodynamischen Kreislaufs.

Das ausgetriebene Ammoniakgas und die bezüglich des Ammoniaks abgereicherte Restlösung werden über die Ammoniakgasleitung 20 bzw. die Restlösungsleitung 22 zu dem Absorber 14 transportiert. Die Restlösungsleitung 22 steht mit der letzten Absorberstufe 32j der Absorberstufenkaskade in Verbindung und weist in ihrem Verlauf den eingangs beschriebenen Wärmetauscher 26 zur Erwärmung des in den Austreiber 12 strömenden Arbeitsmediums auf. Es ist anzumerken, dass die Restlösung - also das abgereicherte Arbeitsmedium - dadurch auf ein deutlich niedrigeres Temperaturniveau abgekühlt wird. Durch eine Pumpe P1 wird der für die Übertragung der Restlösung (10 %-ige Ammoniak-Wasser-Lösung) notwendige Transportdruck bereitgestellt.

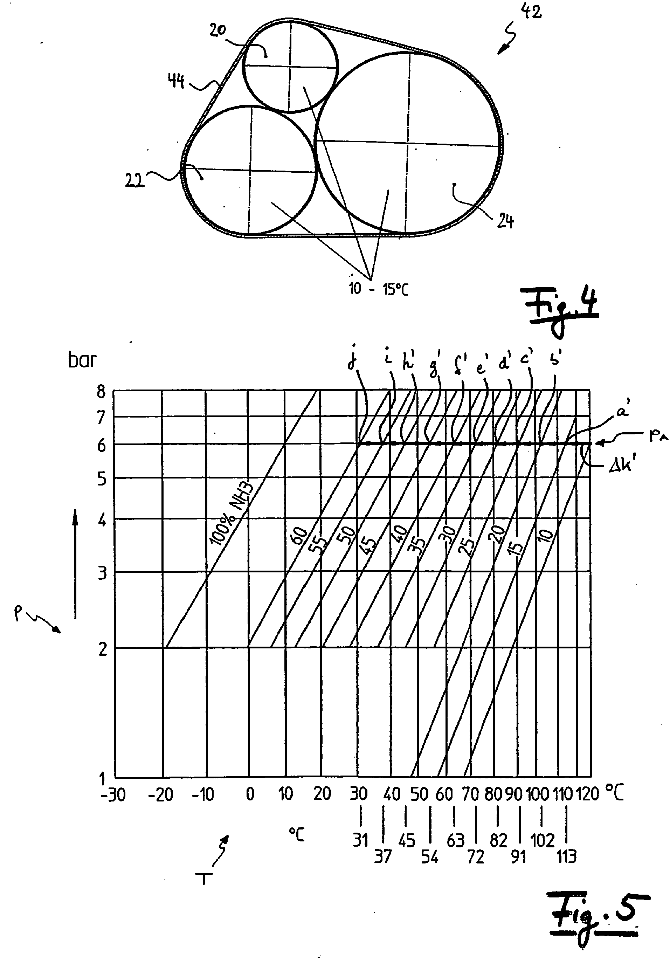

Fig. 4 zeigt einen Querschnitt durch das den Austreiber 12 und den Absorber 14 verbindende Rohrleitungssystem 42. Das Rohrleitungssystem 42 umfasst die Ammoniakgasleitung 20, die Restlösungsleitung 22 und die Rücklaufleitung 24. Die Leitungen 20, 22, 24 sind von einer gemeinsamen Isolierung 44 umgeben, die allerdings einfach ausgeführt sein kann, da der eigentliche Wärmetransport ja nicht durch das Übertragen eines heißen Arbeitsmediums, sondern durch die Phasentrennung des mehrkomponentigen Arbeitsmediums mit anschließender Rekombination der Phasen durch Absorption erfolgt. Die Isolierung 44 stellt außerdem einen Schutz gegen mechanische Einwirkungen und Korrosion bereit. Unter Umständen kann auf die Isolierung 44 auch vollkommen verzichtet werden, ohne dass die Effizienz des Verfahrens wesentlich beeinträchtigt wird.

Durch den Wärmeübertrag mittels getrennter Komponenten des Ammoniak-Wasser-Gemischs und die daher untergeordnete Bedeutung der Rohrleitungssystemisolierung entspricht die Temperatur der übertragenen Fluidströme in etwa der Umgebungstemperatur des das Rohrleitungssystem 42 umgebenden Erdreichs, bei dem hier gezeigten Beispiel etwa 10°C bis 15°C. Die Druck- und Temperaturverhältnisse in der Ammoniakgasleitung 20 sind lediglich dahingehend anzupassen, dass eine Kondensation des Ammoniakgases verhindert wird.

Fig. 5 zeigt einen Ausschnitt des Phasendiagramms von Fig. 2, wobei darin der Verlauf des Absorptionsprozesses des Ammoniakgases durch die abgereicherte Ammoniak-Wasser-Lösung dargestellt ist.

Im Gegensatz zu dem Austreiben erfolgt die Absorption bei einem konstanten Absorptionsdruck p_{A}, der im Wesentlichen dem Transportdruck entspricht. Bei der dargestellten Ausführungsform erhält der Absorber 14 sowohl das Ammoniakgas als auch die abgereicherte Restlösung bei einem Druck von etwa 6 bar. In einem ersten Schritt wird die von dem Austreiber 12 gelieferte 10 %-ige Restlösung durch die Absorption von Ammoniakgas angereichert und erreicht eine Ammoniakkonzentration von 15 %. Bei diesem Absorptionsschritt beträgt die maximal erreichbare Temperatur in der Wasser-Ammoniak-Lösung 113°C, wie dem Phasendiagramm zu entnehmen ist (Zustand a'). Durch die Absorption des Ammoniakgases wird also die Temperatur der Restlösung auf maximal 113°C angehoben und die Restlösung gleichzeitig angereichert. Die Konzentrationsänderung ΔK' ist durch einen horizontalen Pfeil markiert.

Die Erwärmung der Restlösung wird an die Wärmesenke, beispielsweise einen Heizwasserkreislauf eines Haushalts, abgegeben. Die um 5 % angereicherte Restlösung empfängt in einem nächsten Schritt wiederum Ammoniakgas und wird dadurch auf bis zu 102°C erwärmt (Zustand b'), wobei die Ammoniakkonzentration in der Restlösung auf 20 % steigt. Dieses Vorgehen wird wiederholt (Zustände c' bis j'), bis die Ausgangsmischung (60 %-igen Ammoniak-Wasser-Lösung) erreicht ist und die im Austreiber 12 zur Verdampfung des Ammoniakgases aufgenommene Wärmemenge im Wesentlichen wieder abgegeben wurde.

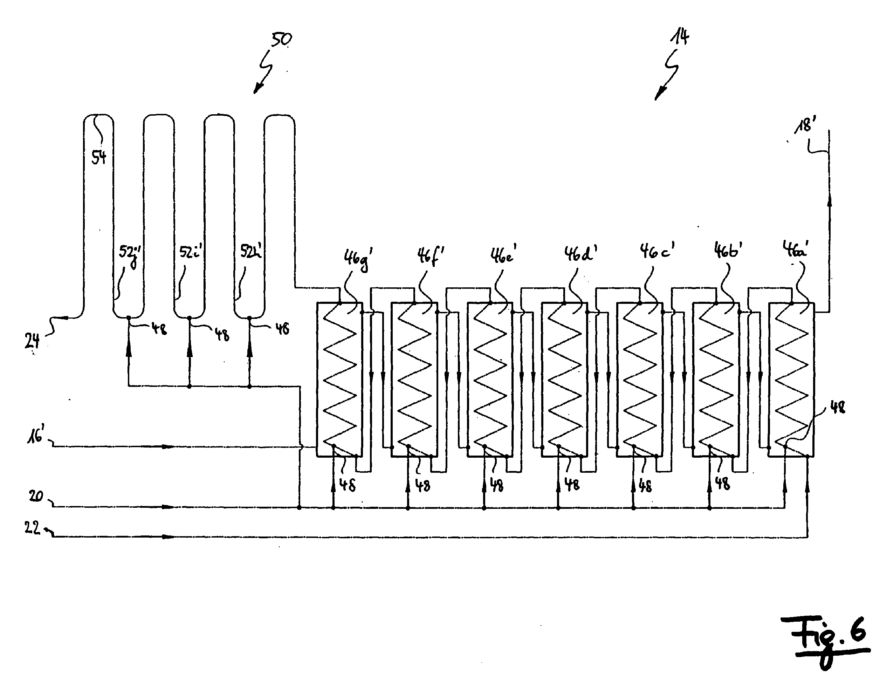

Fig. 6 zeigt schematisch, wie ein Absorber 14 bei einem Verbraucher ausgestaltet sein kann. Der Absorber 14 umfasst sieben Absorberwärmetauscherstufen 46a' bis 46g', wobei die Buchstaben den entsprechenden Druck- und Temperaturzuständen a' bis g' der Fig. 5 entsprechen. Jede der Absorberwärmetauscherstufen 46a' bis 46g' wird mit Ammoniakgas von der Ammoniakgasleitung 20 versorgt. Die Restlösungsleitung 22 steht mit der Absorberwärmetauscherstufe 46a' in Verbindung. Dort wird der 10 %-igen Restlösung Ammoniakgas durch eine Venturidüse 48 zugeführt. Durch die Absorption des Gases durch die Restlösung wird Wärme freigesetzt, die an das Arbeitsmittel der Wärmesenke abgegeben wird, welches durch die Ableitung 18' abgeführt wird. Die um 5 % angereicherte Restlösung wird anschließend der Absorberwärmetauscherstufe 46b' zugeführt, wo sich der vorstehend beschriebene Vorgang in analoger Weise wiederholt.

Anstelle der Venturidüse 48 kann eine andere geeignete Vorrichtung zum Einleiten des Ammoniakgases in die Restlösung vorgesehen sein.

Das Arbeitsmittel der Wärmesenke wird der Absorberwärmetauscherstufenkaskade erstmals an der Absorberwärmetauscherstufe 46g' zugeführt. Dadurch wird das Arbeitsmittel der Wärmesenke - also des Verbrauchers - schrittweise von 54°C (Zustand g') auf maximal 113°C (Zustand a') angehoben, während im Gegenzug die Ammoniakkonzentration in der Restlösung von 10 % (Zustand a') auf 45 % (Zustand g') steigt.

Die aus der Absorberwärmetauscherstufe 46g' strömende Lösung ist nicht geeignet, das Heizwasser in einer weiteren Absorberstufe auf effiziente Weise vorzuwärmen, da durch weitere Konzentrationsänderungen nur Temperaturen erreicht werden können, die geringfügig höher sind als die Temperatur des in die Absorberkaskade einströmenden Heizwassers. Bei geringen Temperaturdifferenzen ist die Effizienz des Wärmeaustauschs gering. Der Absorber 14 weist daher eine Fußbodenheizungskomponente 50 auf, die in drei Stufen 52h', 52i', 52j' durch Zufuhr von Ammoniakgas das restliche Heizpotential der Restlösung ausnutzt. Durch die drei Anreicherungsstufen von 45 % auf 50 % bzw. von 50 % auf 55 % bzw. von 55 % auf 60 % kann die Restlösung auf Temperaturen von 45°C (Zustand h') bzw. 37°C (Zustand i') bzw. 31°C (Zustand j') erwärmt werden. Diese Temperaturen eignen sich bei geeigneter Konzipierung des Heizungssystems gut für Fußbodenheizungen. In der Fußbodenheizungskomponente 50 wird die Wärme der Restlösung direkt an das Gebäude abgegeben.

Die nach der Anreicherungsstufe 52j' wieder das Ausgangsmischungsverhältnis von 60 % aufweisende Lösung kann in weiteren Heizschlaufen 54 (in Fig. 6 nur eine gezeigt) seine Restwärme an das Gebäude abgeben, bevor sie über die Rücklaufleitung 24 wieder dem Austreiber 12 zugeführt wird.

Den vorstehenden Ausführungen ist ohne weiteres zu entnehmen, dass die genannten Druck-, Temperatur- und Konzentrationswerte lediglich beispielhaften Charakter haben. Die p-T-Zustände der einzelnen Stufen können den Anforderungen entsprechend frei gewählt werden. Außerdem können andere Arbeitsmedien vorgesehen sein, die für die geforderten Temperaturbereiche geeignet sind.

Insbesondere ist es möglich, dass - abweichend von der vorstehend beschriebenen beispielhaften Ausführungsform des Verfahrens - die Verdampfungstemperatur Tv kleiner ist als 70°C. Bei einer Verdampfungstemperatur Tv von ungefähr 60°C entspricht die durch die Turbine 34 abgegebene Leistung in etwa der von dem Verdichter 38 aufgenommen Leistung.

Bei niedrigeren Verdampfungstemperaturen Tv sollten auch die anderen relevanten Verfahrensparameter angepasst werden, um das erfindungsgemäße Verfahren zu optimieren. Bei einer Verdampfungstemperatur Tv von 60°C ist es beispielsweise vorteilhaft, wenn die Ammoniakkonzentration lediglich auf 20 % abgesenkt wird. Mit anderen Worten entfallen in diesem Fall die letzten beiden Abreicherungsschritte i und j (siehe Fig. 2) beim Verdampfen des Ammoniaks. Folglich kann auf die entsprechenden Austreiberstufen 32i und 32j verzichtet werden. Wärmesenkenseitig entfallen dann auch die Absorberwärmetauscherstufen 46a' und 46b'.

Wird bei noch niedrigeren Verdampfungstemperaturen Tv keine entsprechende Anhebung der Minimalkonzentration des Ammoniaks in der Restlösung vorgenommen, muss der Verdichter 38 zusätzlich von einem weiteren Aggregat angetrieben werden, da die Turbinenleistung zum Betrieb des Verdichters 38 nicht mehr ausreicht.

Es ist weiterhin anzumerken, dass die vorgeschlagene Extraktionsvorrichtung, die auf einer Turbinen-Verdichter-Kombination basiert, auch für eine Vielzahl von anderen Einsatzbereichen geeignet ist, bei denen eine effiziente Extraktion einer Gaskomponente aus zumindest einer Trägerflüssigkeit von Bedeutung ist.

### Bezugszeichenliste

- 10: Wärmetransportsystem
- 12: Austreiber
- 14: Absorber
- 16, 16': Zuleitung
- 18, 18': Ableitung
- 19: Wärmetransportkreislauf
- 20: Ammoniakgasleitung
- 22: Restlösungsleitung
- 24: Rücklaufleitung
- a - j, a'-j': p-T-Zustand
- 26: Wärmetauscher
- 28: Turbinenzufuhrleitung
- 30: Überbrückungsleitung
- 32a - 32j: Austreiberstufe
- 34: Turbine
- 36: Druckreduktionsventil
- 38: Verdichter
- 40: Rotationsachse
- 42: Rohrleitungssystem
- 44: Isolierung
- 46a' - 46g': Absorberwärmetauscherstufe
- 48: Venturidüse
- 50: Fußbodenheizungskomponente
- 52h' - 52j': Anreicherungsstufe

- p_{A}: Absorptionsdruck
- Tv: Verdampfungstemperatur
- ΔK, ΔK': Konzentrationsänderung
- G: Gleichgewichtslinie

## Patentansprüche

1. Verfahren zum Transport von Wärmeenergie von zumindest einer Wärmequelle zu zumindest einer Wärmesenke, insbesondere für ein Fernwärmenetz, mittels eines Arbeitsmediums, das eine Mischung von zumindest einer ersten Komponente mit einem ersten Siedepunkt und einer zweiten Komponente mit einem zweiten Siedepunkt umfasst, wobei der erste Siedepunkt niedriger ist als der zweite Siedepunkt, in den Schritten:
- zumindest teilweises Verdampfen der ersten Komponente des Arbeitsmediums durch Zufuhr von Wärme von der Wärmequelle,
- Transport des verdampften Teils der ersten Komponente separat von dem durch das Verdampfen bezüglich der ersten Komponente abgereicherten Arbeitsmedium von der Wärmequelle zu der Wärmesenke mittels eines Transportmittels,
- Absorption der verdampften ersten Komponente durch das abgereicherte Arbeitsmedium unter Abgabe der beim Verdampfen aufgenommen Wärme an die Wärmesenke,
wobei die Temperatur der erste Komponente und des abgereicherten Arbeitsmediums bei dem Transport von der Wärmequelle zu der Wärmesenke im Wesentlichen einer in der Umgebung des Transportmittels herrschenden Temperatur entspricht.

2. Verfahren zum Transport von Wärmeenergie nach Anspruch 1,
**dadurch gekennzeichnet, dass**
der verdampfte Teil der ersten Komponente in einem gasförmigen Aggregatzustand von der Wärmequelle zu der Wärmesenke transportiert wird, und dass das bezüglich der ersten Komponente abgereicherte Arbeitsmedium in einem flüssigem Aggregatzustand von der Wärmequelle zu der Wärmesenke transportiert wird.

3. Verfahren zum Transport von Wärmeenergie nach Anspruch 1 oder 2,
**dadurch gekennzeichnet, dass**
das Arbeitsmedium durch zwei separate Rohrleitungen (20, 22) von der Wärmequelle zu der Wärmesenke transportiert wird, wobei eine erste Rohrleitung (20) zum Transport der ersten Komponente und eine zweite Rohrleitung (22) zum Transport des bezüglich der ersten Komponente abgereicherten Arbeitsmediums vorgesehen ist, und dass das Arbeitsmedium durch eine dritte Rohrleitung (24) von der Wärmesenke zu der Wärmequelle transportiert wird.

4. Verfahren zum Transport von Wärmeenergie nach zumindest einem der vorstehenden Ansprüche,
**dadurch gekennzeichnet, dass**
das Verdampfen der ersten Komponente des Arbeitsmediums bei im Wesentlichen konstanter Temperatur (Tv) erfolgt, wobei bei sinkender Konzentration (ΔK) der ersten Komponente in dem Arbeitsmedium der Druck des Arbeitsmediums schrittweise abgesenkt wird.

5. Verfahren zum Transport von Wärmeenergie nach zumindest einem der vorstehenden Ansprüche,
**dadurch gekennzeichnet, dass**
das Verdampfen der ersten Komponente des Arbeitsmediums zumindest teilweise in einem ersten Druckbereich des Arbeitsmediums erfolgt, der oberhalb des Drucks der ersten Komponente beim Transport von der Wärmequelle zu der Wärmesenke liegt, und dass das Verdampfen der ersten Komponente des Arbeitsmediums zumindest teilweise in einem zweiten Druckbereich des Arbeitsmediums erfolgt, der unterhalb des Drucks der ersten Komponente beim Transport von der Wärmequelle zu der Wärmesenke liegt.

6. Verfahren zum Transport von Wärmeenergie nach Anspruch 5,
**dadurch gekennzeichnet, dass**
der beim Verdampfen in dem ersten Druckbereich erhaltene Teil der ersten Komponente zur Erzeugung von mechanischer Energie genutzt wird.

7. Verfahren zum Transport von Wärmeenergie nach einem der Ansprüche 5 oder 6,
**dadurch gekennzeichnet, dass**
der beim Verdampfen in dem zweiten Druckbereich erhaltene Teil der ersten Komponente durch zumindest einen Verdichter abgesaugt wird.

8. Verfahren zum Transport von Wärmeenergie nach Anspruch 6 und 7,
**dadurch gekennzeichnet, dass**
die erzeugte mechanische Energie direkt zum Antrieb des Verdichters genutzt wird.

9. Verfahren zum Transport von Wärmeenergie nach zumindest einem der vorstehenden Ansprüche,
**dadurch gekennzeichnet, dass**
die Absorption der ersten Komponente durch das Arbeitsmedium bei einem im Wesentlichen konstanten Druck (p_{A}) erfolgt, wobei bei steigender Konzentration (ΔK') der ersten Komponente in dem Arbeitsmedium die Absorption bei schrittweise sinkenden Temperaturen erfolgt.

10. Verfahren zum Transport von Wärmeenergie nach zumindest einem der vorstehenden Ansprüche,
**dadurch gekennzeichnet,dass**
die erste Komponente des Arbeitsmediums Wasser und die zweite Komponente des Arbeitsmediums Ammoniak ist, wobei das Mischungsverhältnis von Wasser zu Ammoniak in etwa 4 zu 6 beträgt.

11. Extraktionsvorrichtung zur Erhöhung des Wirkungsgrads der Extraktion einer Komponente eines Arbeitsmediums, das eine Mischung von zumindest einer ersten Komponente mit einem ersten Siedepunkt und einer zweiten Komponente mit einem zweiten Siedepunkt umfasst, wobei der erste Siedepunkt niedriger ist als der zweite Siedepunkt, die zumindest eine Turbine (34) und zumindest einen Verdichter (38) umfasst, wobei der Turbine (34) und dem Verdichter (38) jeweils ein durch Zufuhr von Wärme verdampfter Teil der ersten Komponente in einem gasförmigen Zustand zuführbar ist,
wobei der Druck des der Turbine (34) zugeführten Teils der ersten Komponente höher ist als der Druck des dem Verdichter (38) zugeführten Teils der ersten Komponente, und wobei die Turbine (34) durch den ihr zugeführten Teil der ersten Komponente zu einer Drehbewegung antreibbar ist und der Verdichter (38) antreibbar ist, um den Druck des dem Verdichter (38) zugeführten Teils der ersten Komponente zu erhöhen.

12. Extraktionsvorrichtung nach Anspruch 11,
**dadurch gekennzeichnet, dass**
der Turbine (34) und/oder dem Verdichter (38) die gasförmige erste Komponente jeweils auf mehreren verschiedenen Druckniveaus zuführbar ist.

13. Extraktionsvorrichtung nach Anspruch 12,
**dadurch gekennzeichnet, dass**
die Turbine (34) und/oder der Verdichter (38) mehrstufig sind, wobei den Stufen der Turbine (34) und/oder des Verdichters (38) jeweils Teile der gasförmigen ersten Komponente auf einem jeweils stufenspezifischen Druckniveau zuführbar sind.

14. Extraktionsvorrichtung nach zumindest einem der Ansprüche 11 bis 13,
**dadurch gekennzeichnet, dass**
die Turbine (34) und der Verdichter (38) direkt mechanisch miteinander gekoppelt sind, insbesondere eine gemeinsame Rotationsachse (40) aufweisen.

15. Fernwärmenetz zum Transport von Wärmenergie von zumindest einem Wärmeerzeuger zu zumindest einem Wärmeverbraucher mittels eines Arbeitsmediums, das eine Mischung von zumindest einer ersten Komponente mit einem ersten Siedepunkt und einer zweiten Komponente mit einem zweiten Siedepunkt umfasst, wobei der erste Siedepunkt niedriger ist als der zweite Siedepunkt, wobei das Fernwärmenetz zumindest einen Austreiber (12) zum Trennen eines Teils der ersten Komponente von dem Arbeitsmedium, ein Rohrleitungssystem (42) und zumindest einen Absorber (14) zur Absorption des abgetrennten Teils der ersten Komponente durch das bezüglich der ersten Komponente abgereicherte Arbeitsmedium umfasst, wobei das Rohrleitungssystem (42) für den Transport des abgetrennten Teils der ersten Komponente und des bezüglich der ersten Komponente abgereicherten Arbeitsmediums von dem Austreiber (12) zu dem Absorber (14) jeweils eine separate Rohrleitung (20, 22) aufweist.

16. Fernwärmenetz nach Anspruch 15,
**dadurch gekennzeichnet, dass**
dem Austreiber (12) eine Extraktionsvorrichtung nach zumindest einem der Ansprüche 11 bis 14 zugeordnet ist.

17. Fernwärmenetz nach Anspruch 15 oder 16,
**dadurch gekennzeichnet,dass**
der Austreiber (12) bei dem Wärmeerzeuger und der Absorber (14) bei dem Wärmeverbraucher angeordnet sind.
